# EUROPÄISCHE PATENTSCHRIFT

(11) **EP 0 355 416 B1**
(45) Veröffentlichungstag und Bekanntmachung des Hinweises auf die Patenterteilung: **28.09.1994**
(21) Anmeldenummer: 89113413.2
(22) Anmeldetag: 21.07.1989
(51) Int. Cl.: H02M 3/335

(54) **Schaltregler**
Switching regulator
Alimentation stabilisée à découpage

(30) Priorität: 26.08.1988 DE 3828957
(43) Veröffentlichungstag der Anmeldung: 28.02.1990
(73) Patentinhaber: ANT Nachrichtentechnik GmbH, D-71522 Backnang (DE)
(72) Erfinder: Reustle, Hans, Dipl.-Ing., D-7152 Aspach (DE)

(56) Entgegenhaltungen:
- GB-A- 2 180 416
- GB-A- 2 184 901
- US-A- 3 373 334

## Beschreibung

Die Erfindung geht aus von einem Schaltregler gemäß dem Oberbegriff des Patentanspruches 1. Ein solcher Schaltregler ist bekannt aus EP 189 680 A3 oder aus GB 21 84 901 A.

Bei Schaltreglern wird zur Regelung der Ausgangsspannung üblicherweise das Tastverhältnis des Schaltregler-Stellgliedes oder die Pulsfrequenz in Abhängigkeit der Eingangs- und/oder Ausgangsspannung geändert. Bei der Regelung in Abhängigkeit der Ausgangsspannung ist oft eine aufwendige galvanisch getrennte Regelgrößenübertragung notwendig. Die Leistungsbeanspruchung des Gleichrichters bzw. der Gleichrichter in den Ausgangskreisen sind hoch. Bei diesen Schaltreglern gemäß EP 189 680 A3 und GB 21 84 901 A sind im Ausgangskreis Resonanzkreise angeordnet, die in Serie zum sekundärseitigen Gleichrichter liegen.

Aufgabe der Erfindung ist es, den Schaltregler ausgehend vom Oberbegriff des Patentanspruchs 1 derart auszubilden, daß eine einfache Regelung, insbesondere ohne großen Schaltungsaufwand direkt in einem Ausgangskreis möglich ist.

Diese Aufgabe wird durch die Merkmale des Patentanspruchs 1 gelöst. Die Unteransprüche zeigen vorteilhafte Ausgestaltungen auf.

Es ist zwar an sich bekannt, Ausgangskreise von Schaltreglern mit Schwingkreiselementen zu beschalten (EP 123 147 A2; High Frequency Power Conversion, Conference Proceedings, Mai 1986, Seiten 241-250), jedoch ergeben sich hieraus keine Anregungen zur Verwendung der Signalamplitude eines damit gebildeten Schwingkreises zur Ausgangsspannungsregelung.

Ein nach der Erfindung konzipierter Schaltregler besitzt folgende Vorteile:
- Mehrere Ausgangskreise sind getrennt voneinander regelbar.
- Aus einer Zwischenspannung können verschieden polarisierte Ausgangsspannungen gewonnen werden.
- Die Leistungsbeanspruchung der Gleichrichter in den Ausgangskreisen mit Schwingkreis ist vermindert.
- Das Prinzip der Erfindung ist universell einsetzbar, d.h. auf die verschiedensten Schaltregler-Typen (Sperrwandler, Flußwandler ...) anwendbar.

Anhand der Zeichnungen werden Ausführungsbeispiele der Erfindung näher erläutert. Es zeigen
- Figur 1: ein Prinzipschaltbild eines Sperrwandlers mit Pulsfrequenzregelung des Stellgliedes über einen Schwingkreis in einem Ausgangskreis,
- Figur 2: den Aufbau eines Fehlersignalverstärkers,
- Figur 3: den Aufbau eines spannungsgesteuerten Oszillators,
- Figur 4: Signalverläufe für den Sperrwandler gemäß Fig. 1,
- Figur 5: ein Prinzipschaltbild eines Sperrwandlers mit Regelung der Schwingkreisamplitude in einem Ausgangskreis,
- Figur 6: Signalverläufe für den Sperrwandler gemäß Fig. 5,
- Figur 7: eine Schaltungsrealisierung zur Variation der Schwingkreis-Signalamplitude.
- Figur 8: einen Schaltregler mit Pulsfrequenzregelung des Stellgliedes über einen Schwingkreis in einem Ausgangskreis und Variation der Schwingkreis-Signalamplitude in einem anderen Ausgangskreis.

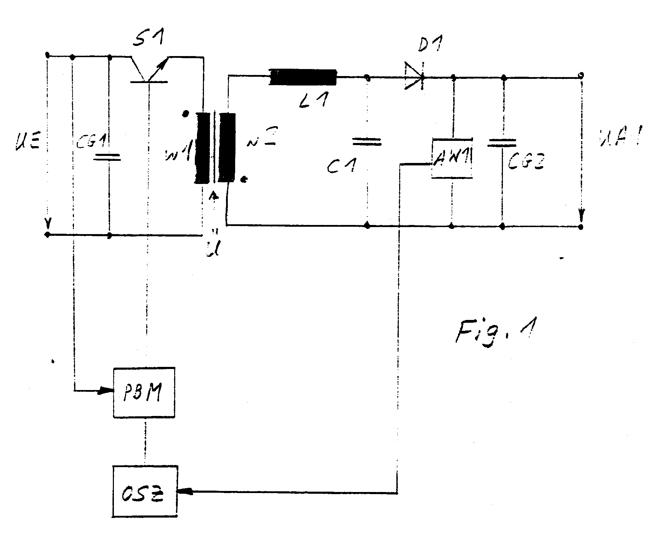

In Figur 1 ist ein Schaltregler in Sperrwandlerausführung mit einem Ausgangskreis dargestellt. Die Eingangsspannung UE des Schaltreglers liegt über einem Glättungskondensator CG1 im Eingangskreis. Parallel zu diesem Glättungskondensator CG1 liegt die Serienschaltung, bestehend aus Stellglied - Schalttransistor S1 - des Schaltreglers und Primärwicklung w1 des Leistungsübertragers Ü. Der Ausgangskreis des Schaltreglers besteht aus der Sekundärwicklung w2 des Leistungsübertragers Ü, dem Gleichrichter D1 und dem Glättungskondensator CG2, an dem die Ausgangsspannung UA1 abgreifbar ist. Der Schalttransistor S1 wird über den Pulsbreitenmodulator PBM bezüglich seines Tastverhältnisses in Abhängigkeit der Höhe der Eingangsspannung UE gesteuert, und zwar so, daß bei zunehmender Eingangsspannung UE das Tastverhältnis (Aus-zu Einzeit) des Schalttransistors S1 zunimmt. Anstelle der Eingangsspannung UE kann auch der Strom durch den Schalttransistor S1 als Steuerkriterium für den Pulsbreitenmodulator PBM herangezogen werden, beispielsweise so, daß der Stromfluß unterbrochen wird, sobald er eine bestimmte Höhe erreicht hat. Es ist auch möglich,insbesondere bei sich wenig ändernder Eingangsspannung UE, das Tastverhältnis für das Schaltreglerstellglied konstant zu halten.

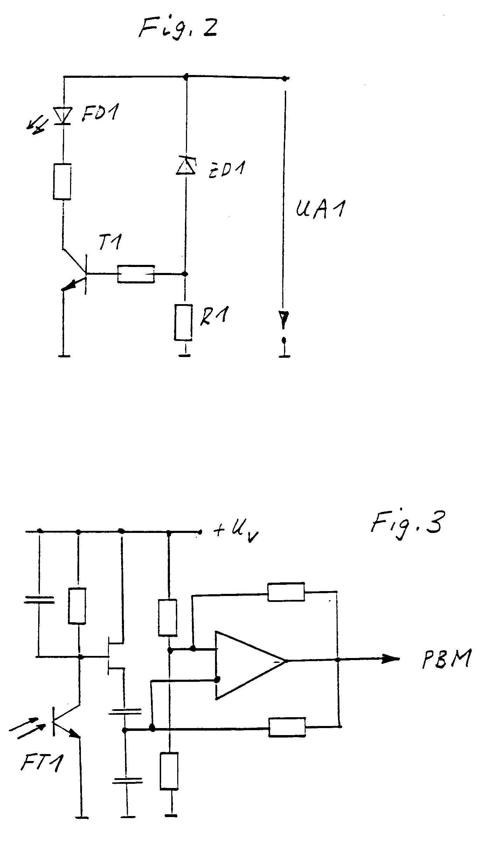

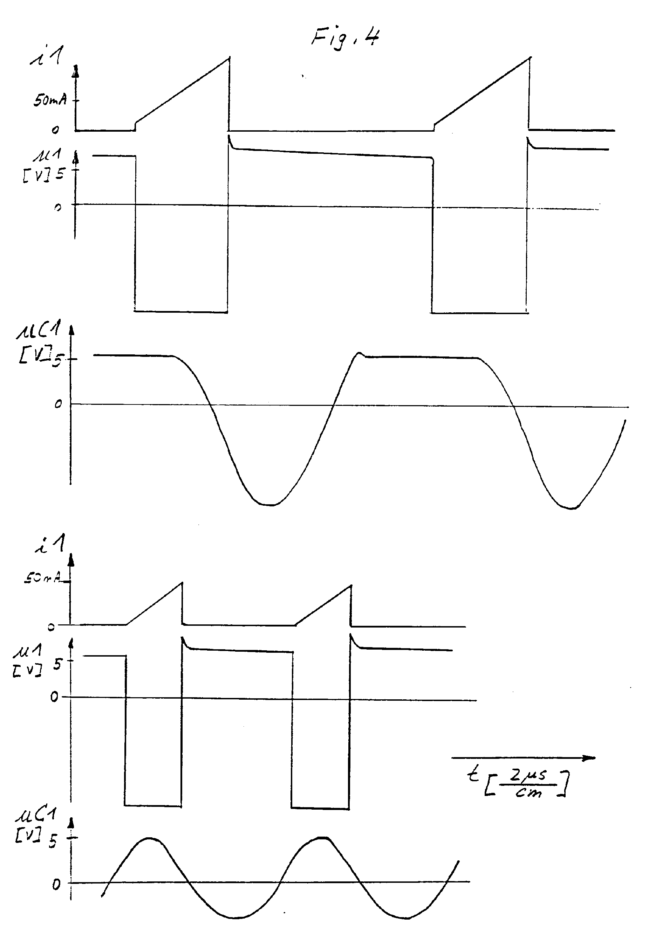

Der Ausgangskreis des Schaltreglers weist einen Schwingkreis mit der Induktivität L1 und der Kapazität C1 auf. Die Induktivität L1 ist zwischen der Sekundärwicklung w2 und dem Gleichrichter D1 angeordnet. Die Kapazität C1 liegt zwischen dem Verbindungspunkt Induktivität L1 - Gleichrichter D1 und dem vom Gleichrichter entfernten Wicklungsende der Sekundärwicklung w2. Die Signalamplitude des Schwingkreises, hier die Spannung uC1 an der Kapazität C1, wird nach Gleichrichtung mittels Gleichrichter D1 über Auswertemittel AW1 erfaßt. Sie stellt auch die Ausgangsspannung UA1 des Ausgangskreises dar. Über diese Auswertemittel AW1 wird die Frequenz des Oszillators OSZ, der als spannungsgesteuerter Oszillator ausgebildet ist, verändert. Als Auswertemittel AW1 für die Ausgangsspannung UA1 ist ein Fehlersignalverstärker, dessen Ausbildung in Figur 2 dargestellt ist, vorgesehen. Je nach Höhe der Ausgangsspannung UA1 ändert sich der Spannungsabfall am Widerstand R1, der wiederum über den Transistor T1 den Strom durch die Photodiode FD1 bestimmt. Bei hoher Ausgangsspannung UA1 erhält der Phototransistor FT1 des in Figur 3 dargestellten spannungsgesteuerten RC-Oszillators über die Photodiode FD1 des Fehlersignalverstärkers von Figur 2 ein Steuersignal zur Erhöhung der Oszillatorfrequenz. Bei kleiner Ausgangsspannung UA1 erniedrigt sich die Oszillatorfrequenz. Durch diese Frequenzregelung wird die Ausgangsspannung UA1 unabhängig von der Belastung konstant gehalten.

In Figur 4 sind die Signalverläufe ausgewählter Signale für den Sperrwandler gemäß Figur 1 dargestellt. Die ersten beiden Zeitdiagramme zeigen den Strom i1 durch das Schaltregler-Stellglied S1 und die Spannung u1 am Schaltregler-Stellglied bei Nennbelastung bezogen auf die Wicklungsspannungen des Übertragers Ü. In diesem Fall ist die Schaltfrequenz des Schaltreglers niedrig. Die übrigen Zeitdiagramme zeigen ebenfalls den Verlauf des Stromes i1, der Spannung u1 und Spannung uc1 nun aber für den Fall eines Leerlaufs. Der Verlauf der Spannung uc1 ist sinusförmig. Hier ist die Schaltfrequenz jedoch hoch. Es wird keine Energie auf den Ausgang abgegeben.

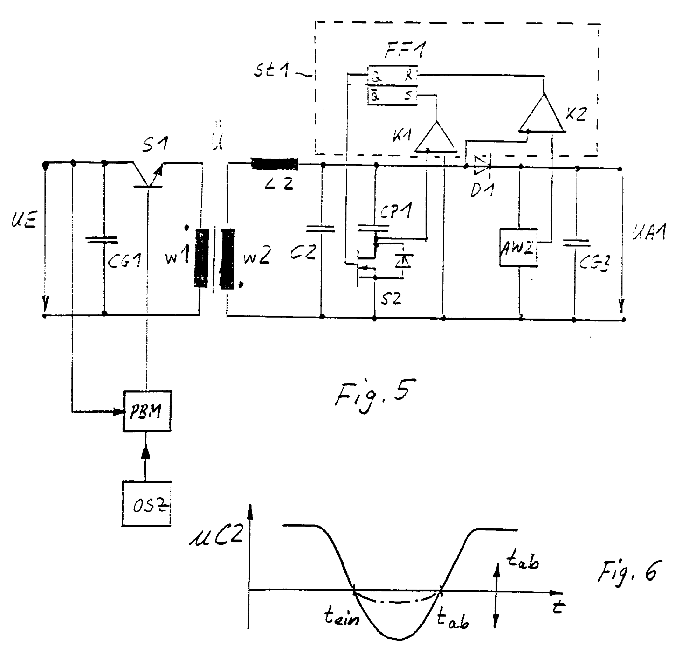

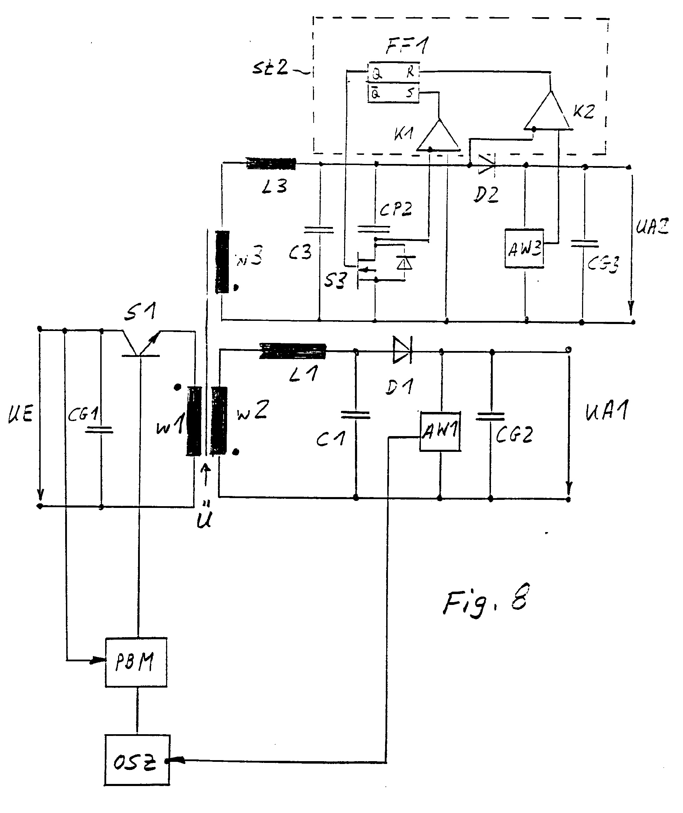

Beim Ausführungsbeispiel gemäß Figur 5 erfolgt wie zuvor eine Steuerung des Tastverhältnisses in Abhängigkeit der Eingangsspannung UE oder ein Konstanthalten des Tastverhältnisses. In Abweichung zum vorherigen Ausführungsbeispiel wird nun aber nicht die Frequenz des Oszillators OSZ verändert, sondern konstant gehalten. Dagegen wird die Resonanzfrequenz des Schwingkreises im Ausgangskreis in Abhängigkeit der Schwingkreisamplitude zur Ausgangsspannungsregelung verändert. Hierzu ist dem Schwingkreis, der wie beim Ausführungsbeispiel gemäß Figur 1 angeordnet ist und aus einer Induktivität L2 und einer Kapazität C2 besteht, über einen Halbleiterschalter S2 ein Kondensator CP1 zuschaltbar. Dieser Kondensator CP1 sowie der Halbleiterschalter S2 sind so angeordnet, daß bei eingeschaltetem Halbleiterschalter S2, hier als n-Kanal FET ausgebildet, der Kondensator CP1 parallel zur Kapazität C2 liegt. Das Tastverhältnis des Halbleiterschalters S2 wird durch den Fehlersignalverstärker - Auswertemittel AW2 - der ähnlich wie der Fehlersignalverstärker gemäß Figur 2 aufgebaut sein kann, und die beiden Komparatoren K1 und K2 sowie das RS-Flip-Flop FF1 als Bestandteil einer Steuerschaltung St1 bestimmt. Der Komparator K1 bestimmt den Einschaltzeitpunkt des Halbleiterschalters S2. Als Schaltkriterium wird ihm die Spannung uS2 über dem Halbleiterschalter S2 zugeführt. Der Ausgang des Komparators K1 ist mit dem Setzeingang S des Flip-Flops FF1 verbunden. Für die folgende Beschreibung ist vorausgesetzt, daß die Kapazität des Kondensators CP1 sehr viel größer ist als diejenige von C2. Der Komparator K1 schaltet den Halbleiterschalter S2 ein, wenn die Spannung uS2 - Drain-Source Spannung des FET - negativ zu werden beginnt. Der FET wird also bei der Nullspannung, d.h. relativ verlustlos, eingeschaltet. Das Abschalten des Halbleiterschalters S2 wird vom Komparator K2 bestimmt. Als Abschaltkriterien werden ihm über den Fehlersignalverstärker in Figur 7 gestrichelt umrandet, das Ausgangsspannungsfehlersignal am nichtinvertierenden Eingang und die Signalamplitude des Schwingkreises - Spannung uC2 - am invertierenden Eingang zugeführt. Der Abschaltzeitpunkt ist gegeben, wenn die Spannung am invertierenden Eingang des Komparators K2 positiver wird als am nichtinvertierenden Eingang.

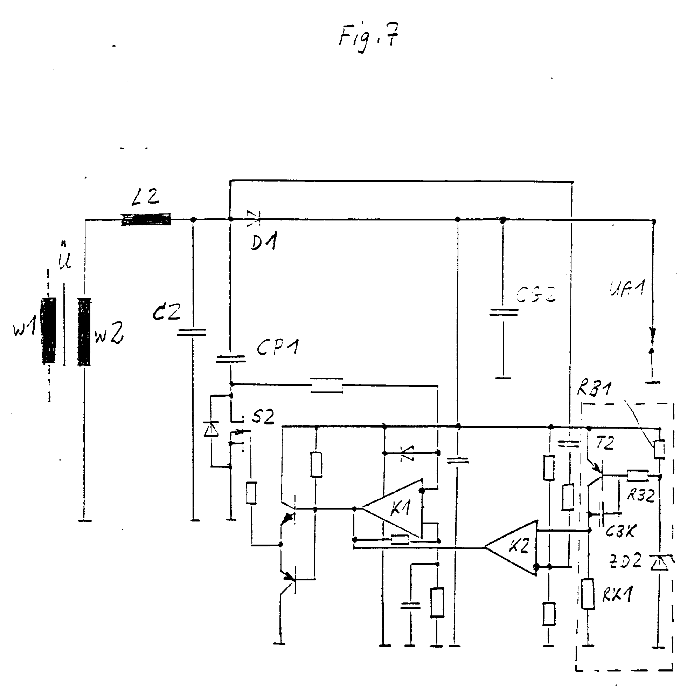

Figur 6 zeigt die Spannung an der Kapazität C2. Über den Abschaltzeitpunkt t_{ab} wird die Spannung uC2 und damit auch die Ausgangsspannung UA1 verändert. Bei Zuschalten des Kondensators CP1 wird die ursprüngliche Sinuskurve (durchgezogene Linie) des Schwingkreises stark abgeflacht (strichpunktierte Linie). Wenn der Kondensator CP1 über den Halbleiterschalter S2 dauernd zugeschaltet ist, stellt sich die kleinste Signalamplitude am Schwingkreis ein. Ist der Kondensator CP1 dauernd abgetrennt, tritt die größte Signalamplitude auf.

Im Ausführungsbeispiel gemäß Figur 7 ist der Komparator K1 mit Hystereseverhalten geschaltet. Der Komparator K1 hält sich so selbst leitend, bis über den Ausgang vom Komparator K2 Nullpotential erscheint. Durch diese Schaltungsrealisierung kann auf das in Figur 5 dargestellte Flip-Flop FF1 verzichtet werden.

Bei der Realisierung gemäß Figur 7 besteht der Fehlersignalverstärker für die Ausgangsspannung UA1 aus einer Transistorstufe T2. Der Emitter dieser Transistorstufe ist auf das Potential der Ausgangsspannung UA1 gelegt. Der Kollektor ist mit einem Kollektorwiderstand RK1 beschaltet, an dem das Fehlersignal für nichtinvertierenden Eingang des Komparators K2 abfällt. Die Basis ist mit einem Spannungsteiler, bestehend aus den Widerständen RB1, RB2 und einer Zenerdiode ZD2 beschaltet. Basis und Kollektor von T2 sind durch einen Kondensator CBK überbrückt. Ein Optokoppler wie beim Ausführungsbeispiel gemäß Figur 1 ist hier nicht nötig, da kein Steuersignal in den Eingangskreis galvanisch getrennt übertragen werden muß.

Die Dimensionierung des Schwingkreises wird vorteilhafterweise folgendermaßen vorgenommen:
- L1 bzw. L2: = 100 »H
- C1 bzw. C2: = 47 nF
- C3: = 1 »F

Anstelle der bisher gezeigten Sperrwandler-Ausführung ist auch eine Flußwandler-Ausführung möglich. Bezüglich des Ausgangskreises mit Schwingkreis ist der Wicklungssinn der Sekundärwicklung w2 zu ändern. Auch Realisierungen von Schaltreglern ohne galvanische Trennung sind einfach aufzubauen. Anstelle der Änderung der Resonanzfrequenz des Schwingkreises über einen zuschaltbaren Kondensator kann selbstverständlich auch eine Induktivität zugeschaltet werden oder eine Kombination aus Kondensator und Induktivität. Der Schwingkreis kann auch anders aufgebaut sein. Auch kann mehr als ein Ausgangskreis mit einem Schwingkreis zur Regelung ausgestattet sein. Eine derartige Ausführungsform zeigt Figur 8. Ein erster Ausgangskreis mit einer Ausgangsspannung UA1, Schwingkreiselementen L1 und C1 sowie Auswertemitteln AW1 steuert die Pulsfrequenz des Oszillators OSZ wie zu Ausführungsbeispiel gemäß Figur 1 beschrieben.Ein weiterer Ausgangskreis mit einer Ausgangsspannung UA2, Schwingkreiselementen L3, C3 und Auswertemitteln AW3 ist mit einer Steuerschaltung St2 zur Variation der Resonanzfrequenz vorgesehen. Hierzu ist wie beim Ausführungsbeispiel gemäß Figur 5 dem Schwingkreiskondensator C3 ein Parallelkondensator CP2 über den Halbleiterschalter S3 zuschaltbar. Die Steuerung des Halbleiterschalters S3 kann wie beim Ausführungsbeispiel gemäß Figur 5 erfolgen.

Natürlich können noch weitere Ausgangskreise mit oder ohne Schwingkreisamplitudenregelung vorgesehen werden.

Bei allen vorgestellten Ausführungsbeispielen kann die Induktivität des Schwingkreises/der Schwingkreise im Leistungsübertrager Ü integriert sein, z. B. durch lose Kopplung der Sekundärwicklung/en mit den restlichen Wicklungen.

## Patentansprüche

1. Schaltregler mit mindestens einem Ausgangskreis, wobei das Stellglied (S1) des Schaltreglers in Serie zur Primärwicklung (w1) eines Transformators (Ü) angeordnet ist und mit einem konstanten Tastverhältnis oder einem von einer Eingangsgröße, insbesondere der Höhe der Eingangsspannung (UE), des Schaltreglers abhängigen Tastverhältnis betrieben wird, wobei in einem Ausgangskreis des Schaltreglers ein Schwingkreis (L2, C2, L3, C3) vorgesehen ist, der mit Auswertemitteln (AW2, AW3) beschaltet ist, dadurch gekennzeichnet, daß diese Auswertemittel (AW2, AW3) mit einer Einrichtung (S2, S3) zur Zuschaltung einer Reaktanz (CP1, CP2) in Abhängigkeit des zu regelnden Ausgangssignals (UA1) an den Schwingkreis (L2, C2, L3, C3) verbunden sind, so daß eine Variation der Resonanzfrequenz des Schwingkreises möglich ist.

2. Schaltregler nach Anspruch 1, dadurch gekennzeichnet, daß zur Variation der Resonanzfrequenz des Schwingkreises (L2, C2, L3, C3) ein Kondensator (CP1, CP2) vorgesehen ist, der über einen Halbleiterschalter (S2, S3) dem frequenzbestimmenden Kondensator (C2, C3) des Schwingkreises (L2, C2, L3, C3) derart zuschaltbar ist, daß die Signalamplitude des Schwingkreises (L2, C2, L3, C3) variierbar ist.

3. Schaltregler nach Anspruch 1, dadurch gekennzeichnet, daß in einem weiteren Ausgangskreis ein weiterer Schwingkreis (L1, C1) vorgesehen ist, daß dieser Schwingkreis (L1, C1) mit Auswertemitteln (AW1) beschaltet ist, und daß diese Auswertemittel (AW1) derart an einen die Schaltfrequenz des Stellgliedes (S1) bestimmenden Oszillator (OSZ) angeschlossen sind, daß in Abhängigkeit der Signalamplitude dieses Schwingkreises eine Änderung der Frequenz des Oszillators (OSZ) eintritt.

4. Schaltregler nach einem der Ansprüche 1 bis 3, dadurch gekennzeichnet, daß zur Variation der Resonanzfrequenz des Schwingkreises (L2, C2, L3, C3) ein Kondensator (CP1, CP2) vorgesehen ist, der über einen Halbleiterschalter (S2, S3) dem frequenzbestimmenden Kondensator (C2, C3) des Schwingkreises (L2, C2, L3, C3) derart zuschaltbar ist, daß die Signalamplitude des Schwingkreises (L2, C2, L3, C3) variierbar ist.

5. Schaltregler nach einem der Ansprüche 1 bis 4, dadurch gekennzeichnet, daß die Auswertemittel (AW1, AW2, AW3) Fehlersignalverstärker für die Ausgangsspannung (UA1 ... UAx) des jeweiligen Ausgangskreises sind.

6. Schaltregler nach Anspruch 4, dadurch gekennzeichnet, daß der Halbleiterschalter (S2, S3) über eine Steuerschaltung (St1, St2) aktivierbar ist, wobei dieser Steuerschaltung als Schaltkriterien zum Abschalten die Ausgangsspannung (UA1 ... UAx) des jeweiligen Ausgangskreises und die Signalamplitude des Schwingkreises und als Schaltkriterium zum Einschalten die am Halbleiterschalter (S2, S3) auftretende Spannung zwischen den Hauptelektroden zuführbar ist.

7. Schaltregler nach Anspruch 6, dadurch gekennzeichnet, daß das Einschaltkriterium die Nullspannung zwischen den Hauptelektroden des Halbleiterschalters (S2, S3) ist.

## Claims

1. Switching regulator with at least one output circuit, wherein the setting member (S1) of the switching regulator is arranged in series with the primary winding (w1) of a transformer (Ü) and operated either at a constant keying ratio or at a keying ratio dependent on an input magnitude, in particular the height of the input voltage (UE), of the switching regulator, wherein an oscillatory circuit (L2, C2, L3, C3), which is connected with evaluating means (AW2, AW3), is provided in an output circuit of the switching regulator, characterised thereby, that these evaluating means (AW2, AW3) together with an equipment (S2, S3) for the switching-in of a reactance (CP1, CP2) in dependence on the output signal (UA1) to be regulated are connected to the oscillatory circuit (L2, C2, L3, C3) so that a variation of the resonant frequency of oscillatory circuit (L2, C2, L3, C3) is possible.

2. Switching regulator according to claim 1, characterised thereby, that a capacitor (CP1, CP2) is provided for the variation of the resonant frequency of oscillatory circuit (L2, C2, L3, C3) and switchable by way of a semiconductor switch (S2, S3) to the frequency-determining capacitor (C2, C3) of the oscillatory circuit (L2, C2, L3, C3) in such a manner that the signal amplitude of the oscillatory circuit (L2, C2, L3, C3) is variable.

3. Switching regulator according to claim 1, characterised thereby, that a further oscillatory circuit (L1, C1) is provided in a further output circuit, that this oscillatory circuit (L1, C1) is connected with evaluating means (AW1) and that these evaluating means (AW1) are connected in such a manner to an oscillator (OSZ) determining the switching frequency of the setting member (S1) that a change in the frequency of the oscillator (OSZ) occurs in dependence on the signal amplitude of this oscillatory circuit.

4. Switching regulator according to one of the claims 1 to 3, characterised thereby, that a capacitor (CP1, CP2) is provided for the variation of the resonant frequency of the oscillatory circuit (L2, C2, L3, C3) and switchable by way of a semiconductor switch (S2, S3) to the frequency-determining capacitor (C2, C3) of the oscillatory circuit (L2, C2, L3, C3) in such a manner that the signal amplitude of the oscillatory circuit (L2, C2, L3, C3) is variable.

5. Switching regulator according to one of the claims 1 to 4, characterised thereby, that the evaluating means (AW1, AW2, AW3) are error signal amplifiers for the output voltage (UA1 to UAx) of the respective output circuit.

6. Switching regulator according to claim 4, characterised thereby, that the semiconductor switch (S2, S3) is activatable by way of a control circuit (St1, St2), wherein the output voltage (UA1 to UAx) of the respective output circuit and the signal amplitude of the oscillatory circuit are feedable to this control circuit as switching criteria for the switching-off and the voltage arising between the main electrodes at the semiconductor switch (S2, S3) is feedable to this control circuit as switching criterion for the switching-on.

7. Switching regulator according to claim 6, characterised thereby, that the criterion for the switching-on is the zero voltage between the main electrodes of the semiconductor switch (S2, S3).

## Revendications

1. Régulateur à découpage possédant au moins un circuit de sortie et dans lequel l'organe de réglage ou de commutation (S1) du régulateur à découpage est disposé en série avec l'enroulement primaire (w1) d'un transformateur (Ü) et est utilisé avec un rapport cyclique constant ou avec un rapport cyclique dépendant d'une grandeur d'entrée, en particulier de l'amplitude de la tension d'entrée (UE) du régulateur à découpage, avec prévision dans un circuit de sortie du régulateur à découpage d'un circuit oscillant (L2, C2, L3, C3) dans lequel sont montés des moyens d'exploitation (AW2, AW3), caractérisé en ce que ces moyens d'exploitation (AW2, AW3) sont reliés à un dispositif (S2, S3) pour ajouter dans le circuit une réactance (CP1, CP2) en fonction du signal de sortie (UA2) à régler sur le circuit oscillant (L2, C2, L3, C3), de manière à permettre une variation de la fréquence de résonance du circuit oscillant.

2. Régulateur à découpage selon la revendication 1, caractérisé en ce que, pour la variation de la fréquence de résonance du circuit oscillant (L2, C2, L3, C3), on a prévu un condensateur (CP1, CP2) qui, à travers un commutateur à semi-conducteur (S2, S3), peut être ajouté dans le circuit au condensateur (C2, C3) déterminant la fréquence du circuit oscillant (L2, C2, L3, C3), de manière que l'amplitude du signal du circuit oscillant (L2, C2, L3, C3) puisse être variée.

3. Régulateur à découpage selon la revendication 1, caractérisé en ce qu'un circuit oscillant supplémentaire (L1, C1) est prévu dans un circuit de sortie supplémentaire, que ce circuit oscillant (L1, C1) est pourvu de moyens d'exploitation (AW1), et que ces moyens d'exploitation (AW1) sont connectés à un oscillateur (OSZ), déterminant la fréquence de commutation de l'organe de réglage (S1), de manière que la fréquence de l'oscillateur (OSZ) soit changée en fonction de l'amplitude du signal de ce circuit oscillant.

4. Régulateur à découpage selon une des revendications 1 à 3, caractérisé en ce que, pour la variation de la fréquence de résonance du circuit oscillant (L2, C2, L3, C3), on a prévu un condensateur (CP1, CP2) qui, à travers un commutateur à semi-conducteur (S2, S3), peut être ajouté dans le circuit au condensateur (C2, C3) déterminant la fréquence du circuit oscillant (L2, C2, L3, C3), de manière que l'amplitude du signal du circuit oscillant (L2, C2, L3, C3) puisse être variée.

5. Régulateur à découpage selon une des revendications 1 à 4, caractérisé en ce que les moyens d'exploitation (AW1, AW2, AW3) sont des amplificateurs de signal d'erreur pour la tension de sortie (UA1 ... UAx) du circuit de sortie concerné.

6. Régulateur à découpage selon la revendication 4, caractérisé en ce que le commutateur à semi-conducteur (S2, S3) est activable à travers un circuit de commande (St1, St2) auquel peuvent être appliquées, en tant que critères pour la coupure, la tension de sortie (UA1 ... UAx) du circuit de sortie concerné et l'amplitude du signal du circuit oscillant et auquel peut être appliquée, en tant que critère pour l'enclenchement, la tension apparaissant sur le commutateur à semi-conducteur (S2, S3) entre les électrodes principales.

7. Régulateur à découpage selon la revendication 6, caractérisé en ce que le critère d'enclenchement est la tension nulle entre les électrodes principales du commutateur à semi-conducteur (S2, S3).
